# EUROPEAN PATENT APPLICATION

(11) **EP 4 542 590 A1**
(43) Date of publication of application: **23.04.2025**
(21) Application number: 23881687.0
(22) Date of filing: 17.10.2023
(51) Int. Cl.: H01F 27/28

(54) **COIL MODULE AND ELECTRONIC DEVICE**

(30) Priority: 28.10.2022 CN 202211333576
(71) Applicant: Huawei Technologies Co., Ltd., Shenzhen, Guangdong 518129 (CN)
(72) Inventor: WANG, Ke, Shenzhen, Guangdong 518129 (CN); LAI, Junhua, Shenzhen, Guangdong 518129 (CN)
(74) Representative: MERH-IP Matias Erny Reichl Hoffmann Patentanwälte PartG mbB
(86) International application number: PCT/CN2023/124963
(87) International publication number: WO 2024/088108

(57) **Abstract**

Embodiments of this application pertains to the field of electronic device technologies, and specifically relates to a coil module and an electronic device. Embodiments of this application are intended to resolve a problem of a large size of the electronic device. According to the coil module and the electronic device provided in embodiments, a first heat dissipation plate is configured to dissipate heat from a heat source, a first coil and the first heat dissipation plate are disposed at a same layer, and the first coil is configured to perform wireless charging. In comparison with a manner in which a coil and a heat dissipation plate are stacked, the first coil and the first heat dissipation plate are located on a same plane, so that a thickness of the coil module is reduced, thereby reducing a thickness of the electronic device, and reducing a size of the electronic device.

## Description

This application claims priority to Chinese Patent Application No. 202211333576.0, filed with the China National Intellectual Property Administration on October 28, 2022 and entitled "COIL MODULE AND ELECTRONIC DEVICE", which is incorporated herein by reference in its entirety.

### TECHNICAL FIELD

Embodiments of this application relate to the field of electronic device technologies, and specifically, to a coil module and an electronic device.

### BACKGROUND

An electronic device (such as a mobile phone or a tablet computer) usually includes a housing, and a mainboard and a coil module that are disposed in the housing. The coil module includes a coil and a heat dissipation plate. The heat dissipation plate is attached to the mainboard. The coil is disposed on a side that is of the heat dissipation plate and that is away from the mainboard. The coil is electrically connected to the mainboard. Wireless charging for the electronic device may be implemented by using the coil. However, the coil is disposed on the side that is of the heat dissipation plate and that is away from the mainboard. As a result, a thickness of the coil module in a direction perpendicular to the mainboard is large, and a size of the electronic device is large.

### SUMMARY

Embodiments of this application provide a coil module and an electronic device, to reduce a size of the electronic device.

According to a first aspect, an embodiment of this application provides a coil module, including a first heat dissipation plate, a second heat dissipation plate, and a first coil. The second heat dissipation plate and the first heat dissipation plate are stacked. The second heat dissipation plate is disposed on a side that is of the first heat dissipation plate and that faces a heat source. The first heat dissipation plate and the second heat dissipation plate are configured to dissipate heat from the heat source. The first coil and the first heat dissipation plate are disposed at a same layer, and the first coil is configured to perform wireless charging.

Based on the foregoing arrangement, the first heat dissipation plate is configured to dissipate heat from the heat source, the first coil and the first heat dissipation plate are disposed at the same layer, and the first coil is configured to perform wireless charging. In comparison with a manner in which a coil and a heat dissipation plate are stacked, the first coil and the first heat dissipation plate are located on a same plane, so that a thickness of the coil module is reduced, thereby reducing a thickness of the electronic device, and reducing a size of the electronic device.

In some embodiments that may include the foregoing embodiments, the coil module further includes a second coil, the second coil is disposed on a side that is of the first coil and that is away from the mainboard, and the second coil covers the first coil. The first coil is electrically connected to the second coil. Such an arrangement can improve wireless charging effect of the coil module.

In some embodiments that may include the foregoing embodiments, the first coil is connected in series to the second coil. In such an arrangement, the first coil and the second coil may form a coil with more turns, to increase a voltage of an induced alternating current.

In some embodiments that may include the foregoing embodiments, the first coil may be connected in parallel to the second coil. Such an arrangement can reduce impedance of the coil module.

In some embodiments that may include the foregoing embodiments, the coil module further includes a second coil, and the second coil and the second heat dissipation plate are disposed at a same layer. In such an arrangement, heat from the heat source may be transferred between the first heat dissipation plate and the second heat dissipation plate, thereby improving a speed of transferring heat and improving heat dissipation effect for the heat source. In addition, in comparison with a manner in which the second heat dissipation plate and the second coil are sequentially disposed in a direction perpendicular to the mainboard (the second heat dissipation plate and the second coil are stacked), a thickness of the coil module in the direction perpendicular to the mainboard can be further reduced, thereby reducing a thickness of the electronic device and further reducing a size of the electronic device.

In some embodiments that may include the foregoing embodiments, the coil module further includes a third coil, the third coil is disposed on a side that is of the first coil and that is away from the heat source, and the third coil covers the first coil. The third coil is connected to the first coil. Such an arrangement can improve the wireless charging effect of the coil module.

In some embodiments that may include the foregoing embodiments, the third coil may be connected in series to the first coil. Such an arrangement can increase a quantity of turns of the coil module, to increase a voltage of an induced alternating current generated by the coil module.

In some embodiments that may include the foregoing embodiments, the third coil may alternatively be connected in parallel to the first coil. Such an arrangement can reduce impedance of the coil module.

In some embodiments that may include the foregoing embodiments, the coil module may further include a third heat dissipation plate. The third heat dissipation plate is disposed on a side that is of the second heat dissipation plate and that faces the heat source, and the third heat dissipation plate is attached to the heat source. In such an arrangement, the first heat dissipation plate, the second heat dissipation plate, and the third heat dissipation plate all can transfer heat generated by the heat source to a direction away from the heat source, thereby improving a speed of transferring heat in the direction away from the heat source, and improving heat dissipation effect for the heat source.

In some embodiments that may include the foregoing embodiments, an avoidance structure is provided at one end that is of the first coil and that is close to the first heat dissipation plate. The avoidance structure is configured to form an avoidance space extending to a center line of the first coil, and the first heat dissipation plate extends into the avoidance space. Such an arrangement can increase an area of the first heat dissipation plate, thereby improving heat dissipation effect for the mainboard.

In some embodiments that may include the foregoing embodiments, the avoidance structure may include an opening, and a part of the first heat dissipation plate is located in the opening. In such an arrangement, the structure is simple and easy to manufacture.

In some embodiments that may include the foregoing embodiments, the first coil encloses an accommodating space that communicates with the opening. The first heat dissipation plate includes a body and an extension portion, the body covers the heat source, and the extension portion is disposed in the opening. The first heat dissipation plate further includes a filling portion located at an end that is of the extension portion and that is away from the body, and the filling portion is disposed in the accommodating space. Such an arrangement can further increase the area of the first heat dissipation plate, further increasing a speed of transferring heat to the housing, and further improving heat dissipation effect for the heat source.

In some embodiments that may include the foregoing embodiments, there may be a plurality of openings. The plurality of openings are spaced apart around the center line of the first coil. There are a plurality of extension portions, and each extension portion extends into one of the openings. To be specific, the body and the filling portion are connected through the plurality of extension portions, to improve a speed of transferring heat between the body and the filling portion.

According to a second aspect, an embodiment of this application further provides an electronic device that includes a housing, and a heat source and the coil module that are disposed in the housing, where at least a part of a first heat dissipation plate is attached to the heat source.

Based on the foregoing arrangement, a second heat dissipation plate and the first heat dissipation plate in the electronic device are stacked. The second heat dissipation plate is disposed on a side that is of the first heat dissipation plate and that faces the heat source. The first heat dissipation plate and the second heat dissipation plate are configured to dissipate heat from the heat source. A first coil and the first heat dissipation plate are disposed at a same layer, and the first coil is configured to perform wireless charging. In comparison with a manner in which a coil and a heat dissipation plate are stacked, the first coil and the first heat dissipation plate are located on a same plane, so that a thickness of the coil module is reduced, thereby reducing a thickness of the electronic device, and reducing a size of the electronic device.

In some embodiments that may include the foregoing embodiments, the heat source includes a mainboard, and the first coil is electrically connected to the mainboard. In such an arrangement, the thickness of the coil module is reduced, and the size of the electronic device is reduced while good heat dissipation effect for the mainboard can be ensured.

### BRIEF DESCRIPTION OF DRAWINGS

FIG. 1 is a diagram 1 of a structure of an electronic device in a related technology;
FIG. 2 is an exploded diagram of an electronic device according to an embodiment of this application;
FIG. 3 is a diagram 1 of a structure of an electronic device according to an embodiment of this application;
FIG. 4 is a diagram of a structure of a first coil in an electronic device according to an embodiment of this application;
FIG. 5 is a diagram of a structure of a coil in a related technology;
FIG. 6 is a diagram of wireless charging performed by an electronic device according to an embodiment of this application;
FIG. 7 is a diagram 2 of a structure of an electronic device according to an embodiment of this application;
FIG. 8 is a sectional view 1 of an electronic device according to an embodiment of this application;
FIG. 9 is a diagram 3 of a structure of an electronic device according to an embodiment of this application;
FIG. 10 is a sectional view 2 of an electronic device according to an embodiment of this application;
FIG. 11a is a diagram 2 of a structure of an electronic device in a related technology;
FIG. 11b is an exploded view of an electronic device in a related technology;
FIG. 12a is a sectional view 1 of an electronic device in a related technology;
FIG. 12b is a sectional view 2 of an electronic device in a related technology;
FIG. 12c is a sectional view 3 of an electronic device according to an embodiment of this application;
FIG. 13 is a diagram 1 of structures of a first coil and a second coil in an electronic device according to an embodiment of this application;
FIG. 14 is a diagram 2 of structures of a first coil and a second coil in an electronic device according to an embodiment of this application;
FIG. 15 is a diagram 4 of a structure of an electronic device according to an embodiment of this application;
FIG. 16 is a diagram 1 of structures of a first coil, a second coil, and a third coil in an electronic device according to an embodiment of this application;
FIG. 17 is a diagram 2 of structures of a first coil, a second coil, and a third coil in an electronic device according to an embodiment of this application;
FIG. 18 is a diagram 3 of a structure of an electronic device in a related technology;
FIG. 19a is a diagram 5 of a structure of an electronic device according to an embodiment of this application;
FIG. 19b is a diagram 6 of a structure of an electronic device according to an embodiment of this application;
FIG. 20a is a diagram 4 of a structure of an electronic device in a related technology;
FIG. 20b is a diagram 5 of a structure of an electronic device in a related technology;
FIG. 21 is a diagram 7 of a structure of an electronic device according to an embodiment of this application;
FIG. 22 is a diagram 8 of a structure of an electronic device according to an embodiment of this application;
FIG. 23 is a diagram 3 of structures of a first coil, a second coil, and a third coil in an electronic device according to an embodiment of this application;
FIG. 24 is a diagram 9 of a structure of an electronic device according to an embodiment of this application;
FIG. 25a is a diagram 1 of fitting between a first heat dissipation plate and an avoidance structure in an electronic device according to an embodiment of this application;
FIG. 25b is a diagram 2 of fitting between a first heat dissipation plate and an avoidance structure in an electronic device according to an embodiment of this application;
FIG. 25c is a diagram 3 of fitting between a first heat dissipation plate and an avoidance structure in an electronic device according to an embodiment of this application;
FIG. 26 is a diagram 3 of structures of a first coil and a second coil in an electronic device according to an embodiment of this application;
FIG. 27 is a diagram 1 of structures of a first heat dissipation plate and a second heat dissipation plate in an electronic device according to an embodiment of this application;
FIG. 28 is a diagram 4 of structures of a first coil and a second coil in an electronic device according to an embodiment of this application;
FIG. 29 is a diagram 2 of structures of a first heat dissipation plate and a second heat dissipation plate in an electronic device according to an embodiment of this application;
FIG. 30 is a diagram 5 of structures of a first coil and a second coil in an electronic device according to an embodiment of this application; and
FIG. 31 is a diagram 3 of structures of a first heat dissipation plate and a second heat dissipation plate in an electronic device according to an embodiment of this application.

Reference numerals: 10: housing; 101: middle frame; 102: accommodating channel; 103: display panel; 104: rear cover; 105: battery; 106: rectifier circuit; 20: mainboard; 30: coil module; 40: wireless charging device; 401: charging coil; 402: frequency conversion circuit; 403: AC/DC converter; 301: first adhesive layer; 302: second adhesive layer; 303: third adhesive layer; 304: fourth adhesive layer; 310: heat dissipation plate; 311: first heat dissipation plate; 312: second heat dissipation plate; 313: third heat dissipation plate; 321: first coil; 320: coil; 322: second coil; 323: third coil; 330: magnetic conductive sheet; 340: wire; 350: ferrite rod; 3210: avoidance structure; 3211: first wire; 3212: first end; 3213: third end; 3221: second wire; 3222: second end; 3223: fourth end; 3224: third wire; 3225: fifth conductive section; 3226: sixth conductive section; 3214: first conductive section; 3215: second conductive section; 3216: third conductive section; 3217: fourth conductive section; 3218: lead wire; 3219: opening; 3231: fourth wire; 3232: sixth end; 3233: fifth end; 3111: body; 3112: extension portion; 3113: filling portion; 3114: epitaxial portion.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It is clear that the described embodiments are merely some rather than all of embodiments of this application. All other embodiments obtained by persons of ordinary skill in the art based on embodiments of this application without creative efforts shall fall within the protection scope of this application.

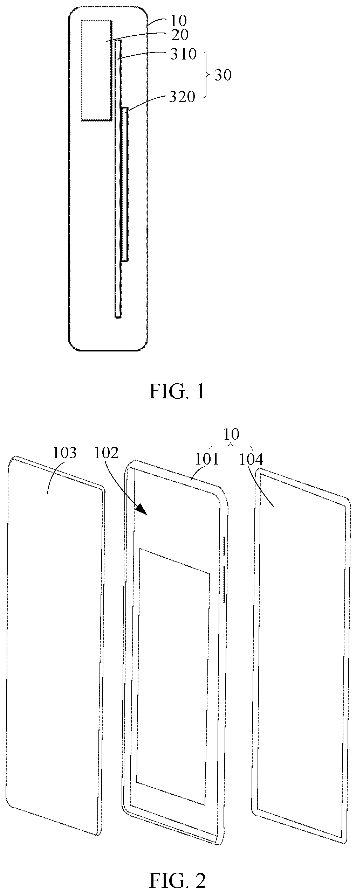

Refer to FIG. 1. An electronic device such as a mobile phone or a tablet computer usually includes a housing 10, and a mainboard 20 and a coil module 30 that are disposed in the housing 10. The mainboard 20 is configured to perform data storage, computing, and the like. Correspondingly, heat generated by the mainboard 20 is large. The coil module 30 includes a coil 320 and a heat dissipation plate 310. The heat dissipation plate 310 is attached to a surface of the mainboard 20. The heat dissipation plate 310 may transfer heat from the mainboard 20 to other positions in the housing 10, and then the heat is transferred to an external environment through the housing 10, to achieve heat dissipation for the mainboard 20. The coil 320 is disposed on a side that is of the heat dissipation plate 310 and that is away from the mainboard 20, and the coil 320 is electrically connected to the mainboard 20, to implement wireless charging for the electronic device by using the coil 320.

However, the coil 320 is disposed on the side that is of the heat dissipation plate 310 and that is away from the mainboard 20, causing a large thickness of the coil module 30 in a direction perpendicular to the mainboard 20, and correspondingly, causing a large thickness of the electronic device in the direction perpendicular to the mainboard 20, and a large size of the electronic device.

In view of this, an embodiment of this application provide a coil module and an electronic device. A coil and a heat dissipation plate are disposed at a same layer. In other words, the heat dissipation plate and the coil are located on a same plane, so that a thickness of the coil module is reduced, thereby reducing a thickness of the electronic device, and reducing a size of the electronic device.

The electronic device provided in this embodiment of this application may include a mobile phone, a tablet computer, a smart watch, a wearable device, and the like. The electronic device is not limited in this embodiment. In this embodiment, an example in which the electronic device is a mobile phone is used for description. It may be understood that this embodiment is not limited thereto, and the electronic device may alternatively be another device.

Refer to FIG. 2. The electronic device in this embodiment includes a housing 10 and a display panel 103 disposed on the housing 10. The housing 10 includes a middle frame 101 and a rear cover 104. The middle frame 101 encloses an accommodating channel 102. The display panel 103 covers one end of the accommodating channel 102, and the rear cover 104 covers the other end of the accommodating channel 102, to seal the accommodating channel 102 by using the display panel 103 and the rear cover 104.

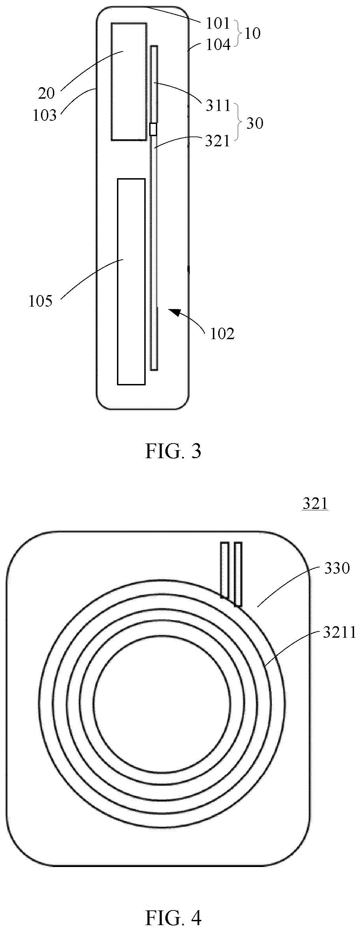

Refer to FIG. 3. The electronic device in this embodiment further includes components such as a mainboard 20 and a battery 105 that are disposed in the accommodating channel 102. Components (not shown) such as a processor and a memory may be disposed on a surface of the mainboard 20, to implement functions such as data computing and storage by using the mainboard 20. The mainboard 20 may be disposed in parallel with the display panel 103. The battery 105 may be disposed on a side that is of the display panel 103 and that faces the mainboard 20. The battery 105 is electrically connected to the mainboard 20 to supply power to the mainboard 20.

In this embodiment, the electronic device further includes a coil module 30 disposed in the accommodating channel 102. The coil module 30 includes a first heat dissipation plate 311 and a first coil 321. At least a part of the first heat dissipation plate 311 is in contact with a heat source in the electronic device, to dissipate heat from the heat source. It may be understood that the heat source is a component with high heat productivity in the accommodating channel 102. For example, the heat source may include the mainboard 20, the battery 105, or the like.

In this embodiment, an example in which the heat source is the mainboard 20 is used for description. The mainboard 20 may be located between the display panel 103 and the first heat dissipation plate 311, and the first heat dissipation plate 311 may be attached to a surface that is of the mainboard 20 and that is away from the display panel 103, so that heat emitted by the components such as the processor and the memory can be quickly transferred to the first heat dissipation plate 311. Then, the heat is transferred in the first heat dissipation plate 311 in a direction that is parallel to the first heat dissipation plate 311 and that is away from the mainboard 20, so that the heat is dispersed to other positions in the housing 10. Finally, the heat is transferred to an external environment through the housing 10 (for example, the middle frame 101 and the rear cover 104). In this way, the heat is dissipated from the mainboard 20.

It may be understood that the first heat dissipation plate 311 is a thin plate with high heat conductivity, so that the heat can be quickly transferred in the first heat dissipation plate 311, and then, the heat emitted by the mainboard 20 can be quickly transferred to another position of the housing 10. For example, a material of the first heat dissipation plate 311 may include graphite, copper, or the like. In an implementation in which the material of the first heat dissipation plate 311 is graphite, the material of the first heat dissipation plate 311 may be graphene. The graphene has high heat conductivity, and a heat-conduction rate of the first heat dissipation plate 311 can be improved by using the graphene, to increase a speed of transferring heat in the first heat dissipation plate 311, thereby improving heat dissipation effect for the mainboard 20. In addition, the graphene has a low density, and mass of the first heat dissipation plate 311 may be reduced by using the graphene, thereby reducing mass of the electronic device.

The first coil 321 and the first heat dissipation plate 311 are disposed at a same layer. In other words, the first coil 321 and the first heat dissipation plate 311 are located on a same plane. For example, a surface of the first coil 321 that faces the mainboard 20 and a surface of the first heat dissipation plate 311 that faces the mainboard 20 may be located on a same plane, and/or a surface of the first coil 321 that is away from the mainboard 20 and a surface of the first heat dissipation plate 311 that is away from the mainboard 20 are located on a same plane.

Refer to FIG. 4. The first coil 321 may include a first wire 3211 that is spirally wound around a center, and turns of the first wire 3211 are located on a same plane. The first heat dissipation plate 311 (as shown in FIG. 3) and the plane are coplanar, to ensure that the first coil 321 and the first heat dissipation plate 311 are at the same layer. Both ends of the first wire 3211 are electrically connected to the mainboard 20, so that when the first coil 321 approaches an external wireless charging device, the first coil 321 may charge the electronic device, thereby implementing wireless charging. The coil module 30 may further include a soft magnetic material layer 330 covering the first wire 3211. The soft magnetic material layer 330 is made of a soft magnetic material (for example, nanocrystalline soft magnetic alloy). Such an arrangement can increase a density of magnetic induction lines of the first coil 321, thereby increasing a voltage of an induced alternating current generated by the coil module 30.

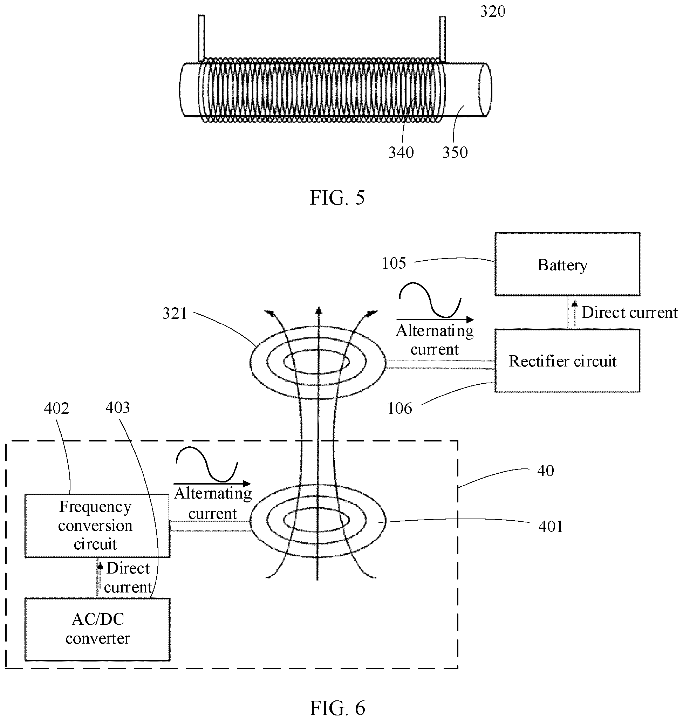

In a related technology shown in FIG. 5, a coil 320 used for wireless charging in a device like a stylus includes a ferrite rod 350 and a wire 340 wound around the ferrite rod 350, and turns of the wire 340 are sequentially disposed along a direction of a center line of the ferrite rod 350. In comparison with the foregoing related technology, in this embodiment, as shown in FIG. 4, the turns of the first coil 321 are all located on the same plane, so that a thickness of the first coil 321 in a direction perpendicular to the mainboard 20 can be reduced.

It may be understood that, as shown in FIG. 6, a wireless charging device 40 includes a charging coil 401, a frequency conversion circuit 402, and an AC/DC converter 403. An input end of the frequency conversion circuit 402 is electrically connected to the AC/DC converter 403, and an output end of the frequency conversion circuit 402 is electrically connected to the charging coil 401. During operation, the AC/DC converter 403 may be connected to mains electricity, to transfer a direct current to the frequency conversion circuit 402. The frequency conversion circuit 402 processes the direct current to convert the direct current into an alternating current, and then transfers the alternating current to the charging coil 401, so that the charging coil 401 generates an alternating magnetic field. When the electronic device approaches the charging coil 401, the first coil 321 is located in the alternating magnetic field generated by the charging coil 401, so that an induced alternating current generated on the first coil 321. A rectifier circuit 106 electrically connected to the first coil 321 may be disposed on the mainboard 20. The rectifier circuit 106 processes the induced alternating current to form a direct current. The direct current may charge the battery 105 of the electronic device, to implement wireless charging.

Still refer to FIG. 3. In the coil module 30 of this embodiment, the first heat dissipation plate 311 is configured to dissipate heat from the heat source, the first coil 321 and the first heat dissipation plate 311 are disposed at the same layer, and the first coil 321 is configured to perform wireless charging. In comparison with a related technology in which a coil and a heat dissipation plate are stacked, in this embodiment, the first coil 321 and the first heat dissipation plate 311 are disposed at the same layer. In other words, the first coil 321 and the first heat dissipation plate 311 are located on the same plane, so that a thickness of the coil module 30 is reduced, thereby reducing a thickness of the electronic device, and reducing a size of the electronic device.

**In** this embodiment of this application, there may be one or more heat dissipation plates in the coil module 30, and there may be one or more coils. The following describes a plurality of scenarios.

### Scenario 1

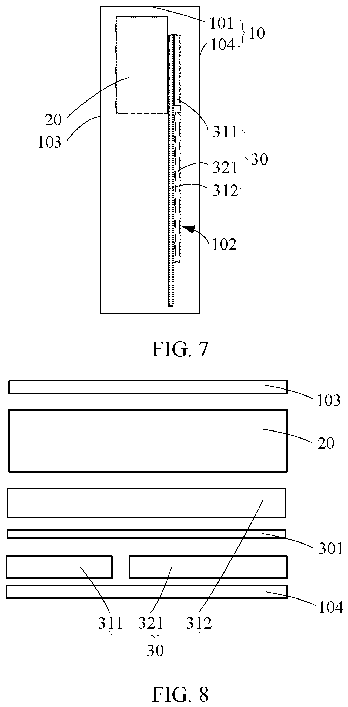

Refer to FIG. 7. In this scenario, the coil module 30 further includes a second heat dissipation plate 312. The second heat dissipation plate 312 and the first heat dissipation plate 311 are stacked, and the second heat dissipation plate 312 is disposed on a side that is of the first heat dissipation plate 311 and that faces the heat source (the mainboard 20). In other words, the second heat dissipation plate 312 is located between the first heat dissipation plate 311 and the mainboard 20. The second heat dissipation plate 312 may be attached to the first heat dissipation plate 311, so that heat from the mainboard 20 can be transferred between the first heat dissipation plate 311 and the second heat dissipation plate 312, thereby increasing a speed of transferring heat in a direction parallel to the mainboard 20, and improving heat dissipation effect for the mainboard 20.

It may be understood that the first heat dissipation plate 311 and the first coil 321 are disposed at the same layer. Therefore, the first heat dissipation plate 311 may cover only an area with a high heat amount on the mainboard 20, or covers only the entire mainboard 20. A part of the second heat dissipation plate 312 may cover the entire mainboard 20, or a part of the second heat dissipation plate 312 may cover the area with the high heat dissipation amount in the mainboard 20, and the other part of the second heat dissipation plate 312 extends outward from the mainboard 20. In this way, an area of the second heat dissipation plate 312 may be increased, so that heat in the second heat dissipation plate 312 may be dispersed to a large area in the housing 10. This improves a speed of transferring heat from the second heat dissipation plate 312 to the housing 10, and improves the heat dissipation effect for the mainboard 20.

In some implementations, projections of the first heat dissipation plate 311 and the first coil 321 onto a plane on which the mainboard 20 is located are in a projection of the second heat dissipation plate 312 onto the plane on which the mainboard 20 is located, so that the second heat dissipation plate 312 has a large enough area for heat dissipation, thereby improving heat dissipation effect for the mainboard 20.

Refer to FIG. 8. For example, the first heat dissipation plate 311 may be connected to the second heat dissipation plate 312 through a first adhesive layer 301. Similarly, the first coil 321 may also be connected to the second heat dissipation plate 312 through the first adhesive layer 301.

It may be understood that a thickness of the first heat dissipation plate 311 may be different from a thickness of the first coil 321. Correspondingly, a thickness of a part of the first adhesive layer 301 between the first heat dissipation plate 311 and the second heat dissipation plate 312 may be different from a thickness of a part of the first adhesive layer 301 between the first coil 321 and the second heat dissipation plate 312. In this way, a surface of the first heat dissipation plate 311 that is away from the mainboard 20 and a surface of the first coil 321 that is away from the mainboard 20 are located on a same plane. For example, when the thickness of the first heat dissipation plate 311 is greater than the thickness of the first coil 321, the thickness of the first adhesive layer 301 between the first heat dissipation plate 311 and the second heat dissipation plate 312 may be set to be less than the thickness of the first adhesive layer 301 between the first coil 321 and the second heat dissipation plate 312. Alternatively, when the thickness of the first heat dissipation plate 311 is less than the thickness of the first coil 321, the thickness of the first adhesive layer 301 between the first heat dissipation plate 311 and the second heat dissipation plate 312 may be set to be greater than the thickness of the first adhesive layer 301 between the first coil 321 and the second heat dissipation plate 312.

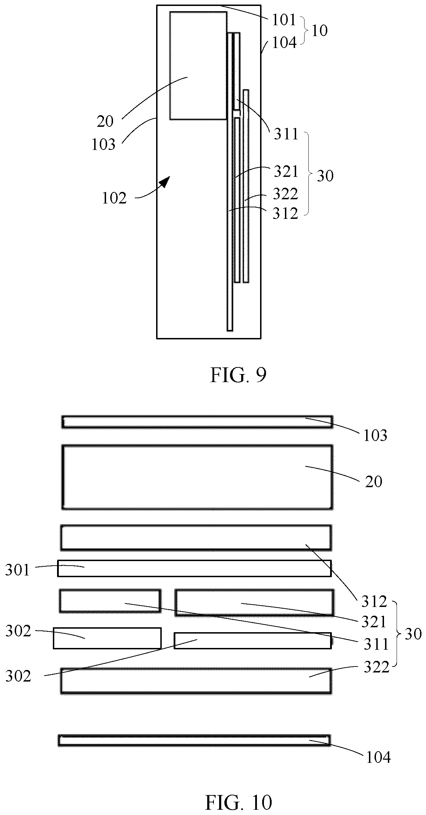

Refer to FIG. 9. In this scenario, the coil module 30 further includes a second coil 322. The second coil 322 is disposed on a side that is of the first coil 321 and that is away from the mainboard 20, and the second coil 322 covers the first coil 321. For example, as shown in FIG. 10, the second coil 322 may be connected to the first coil 321 and the first heat dissipation plate 311 through a second adhesive layer 302.

It may be understood that, in an implementation in which a thickness of the first coil 321 is different from a thickness of the first heat dissipation plate 311, a thickness of a second adhesive layer 302 between the first coil 321 and the second coil 322 may be different from a thickness of the adhesive layer between the first heat dissipation plate 311 and the second coil 322, to ensure that surfaces of the second adhesive layers 302 that are away from the mainboard 20 are an entire plane, so as to facilitate bonding between the second coil 322 and the second adhesive layer 302.

In some implementations, a thickness of the second heat dissipation plate 312 may be 50 µm, a thickness of the first adhesive layer 301 is 10 µm, the thickness of the first heat dissipation plate 311 is 50 µm, and thicknesses of both the first coil 321 and the second coil 322 are 65 µm. Correspondingly, the thickness of the second adhesive layer 302 between the first heat dissipation plate 311 and the second coil 322 may be set to 25 µm, and the thickness of the second adhesive layer 302 between the first coil 321 and the second coil 322 may be set to 10 µm, so that the surfaces of the second adhesive layers 302 that are away from the mainboard 20 are an entire plane, so as to facilitate bonding between the second coil 322 and the second adhesive layer 302. Certainly, the thickness of the second adhesive layer 302 between the first heat dissipation plate 311 and the second coil 322 may alternatively be set to 20 µm, and the thickness of the second adhesive layer 302 between the first coil 321 and the second coil 322 may be set to 5 µm, so that the surfaces of the second adhesive layers 302 that are away from the mainboard 20 are also an entire plane.

It may be understood that the first coil 321 and the first heat dissipation plate 311 are disposed at a same layer, and consequently, an area of the first coil 321 is limited. The second coil 322 covers the first coil 321. In this case, the second coil 322 may further cover the first heat dissipation plate 311, thereby increasing an area of the second coil 322 and a quantity of turns of the second coil 322.

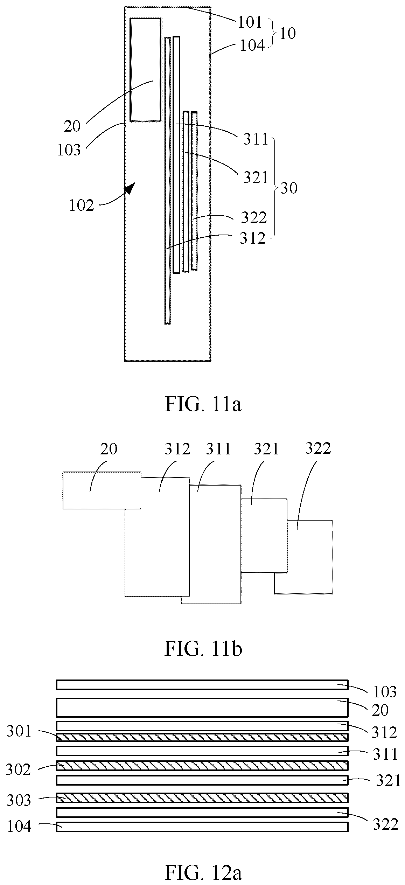

In a related technology shown in FIG. 11a and FIG. 11b, a coil module 30 includes a first heat dissipation plate 311, a second heat dissipation plate 312, a first coil 321, and a second coil 322 that are stacked. The second heat dissipation plate 312 is attached to a mainboard 20, the first heat dissipation plate 311 is disposed between the first coil 321 and the second heat dissipation plate 312, and the second coil 322 is disposed on a side that is of the first coil 321 and that is away from the mainboard 20. Refer to FIG. 12a. A first heat dissipation plate 311 is connected to a second heat dissipation plate 312 through a first adhesive layer 301, the first heat dissipation plate 311 is connected to a first coil 321 through a second adhesive layer 302, and a second coil 322 is connected to the first coil 321 through a third adhesive layer 303. Correspondingly, thicknesses of both the first heat dissipation plate 311 and the second heat dissipation plate 312 are 50 µm, thicknesses of the first adhesive layer 301, the second adhesive layer 302, and the third adhesive layer 303 are all 10 µm, thicknesses of both the first coil 321 and the second coil 322 are 65 µm, and a thickness of the coil module 30 is 260 µm. In comparison with the foregoing related technology, as shown in FIG. 10, in this embodiment, the first coil 321 and the first heat dissipation plate 311 are disposed at the same layer, the thickness of the second heat dissipation plate 312 is 50 µm, the thickness of the first adhesive layer 301 is 10 µm, the thickness of the first heat dissipation plate 311 is 50 µm, and the thicknesses of both the first coil 321 and the second coil 322 are 65 µm. In an implementation in which the thickness of the second adhesive layer 302 between the first heat dissipation plate 311 and the second coil 322 is set to 25 µm, and the thickness of the second adhesive layer 302 between the first coil 321 and the second coil 322 is set to 10 µm, a thickness of the coil module 30 is 185 µm. In an implementation in which the thickness of the second adhesive layer 302 between the first heat dissipation plate 311 and the second coil 322 is set to 20 µm, and the thickness of the second adhesive layer 302 between the first coil 321 and the second coil 322 is set to 5 µm, a thickness of the coil module 30 is 180 µm. It can be learned that the thickness of the coil module 30 in this embodiment is less than the thickness of the coil module 30 in the related technology.

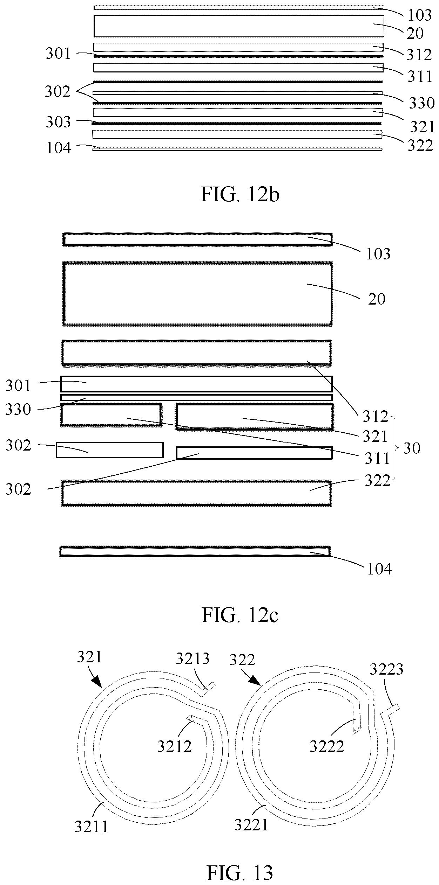

In a related technology shown in FIG. 12b, a magnetic conductive sheet 330 is disposed between a first coil 321 and a first heat dissipation plate 311. The magnetic conductive sheet 330 is made of a soft magnetic material (for example, nanocrystalline soft magnetic alloy), to increase densities of magnetic induction lines of the first coil 321 and a second coil 322, thereby increasing a voltage of an induced alternating current generated by a coil module 30.

As shown in FIG. 12c, in this scenario, a magnetic conductive sheet 330 may be also disposed between the first coil 321 and the second heat dissipation plate 312, to increase densities of magnetic induction lines of the first coil 321 and the second coil 322, thereby increasing a voltage of an induced alternating current generated by the coil module 30. There may be one or more magnetic conductive sheets 330. A quantity of magnetic conductive sheets 330 is not limited in this embodiment. For example, the quantity of magnetic conductive sheets 330 may be 2, 3, 4, or the like.

The first coil 321 is electrically connected to the second coil 322. Such an arrangement can improve wireless charging effect of the coil module 30.

In some implementations, as shown in FIG. 13, the first coil 321 may be connected in series to the second coil 322. In such an arrangement, the first coil 321 and the second coil 322 may form a coil with more turns, to increase a voltage of an induced alternating current. For example, the first coil 321 includes a first wire 3211 that extends spirally around a center, and the second coil 322 includes a second wire 3221 that extends spirally around a center. A first end 3212 that is of the first wire 3211 and that is close to the center is electrically connected to a second end 3222 that is of the second wire 3221 and that is close to the center. Both a third end 3213 that is of the first wire 3211 and that is away from the center and a fourth end 3223 that is of the second wire 3221 and that is away from the center are electrically connected to the mainboard 20 (as shown in FIG. 10). In this way, the first coil 321 is connected in series to the second coil 322. The first end 3212 and the second end 3222 may be electrically connected through a conductive hole. To be specific, a through hole is provided on the first end 3212, and the through hole penetrates the first end 3212, the second adhesive layer 302, and the second end 3222. Then, a metal side wall is formed on a hole wall of the through hole, or a metal column is formed in the through hole. In this way, the first end 3212 is electrically connected to the second end 3222. Similarly, the third end 3213 and the fourth end 3223 may be connected to the mainboard 20 through a conductive hole. Alternatively, the third end 3213 and the fourth end 3223 are connected to the mainboard 20 through a wire. A manner of connection of the first coil 321 and the second coil 322 to the mainboard 20 is not limited in this embodiment.

It may be understood that the third end 3213 and the fourth end 3223 may be disposed close to the mainboard 20, to facilitate connection of the third end 3213 and the fourth end 3223 to the mainboard 20.

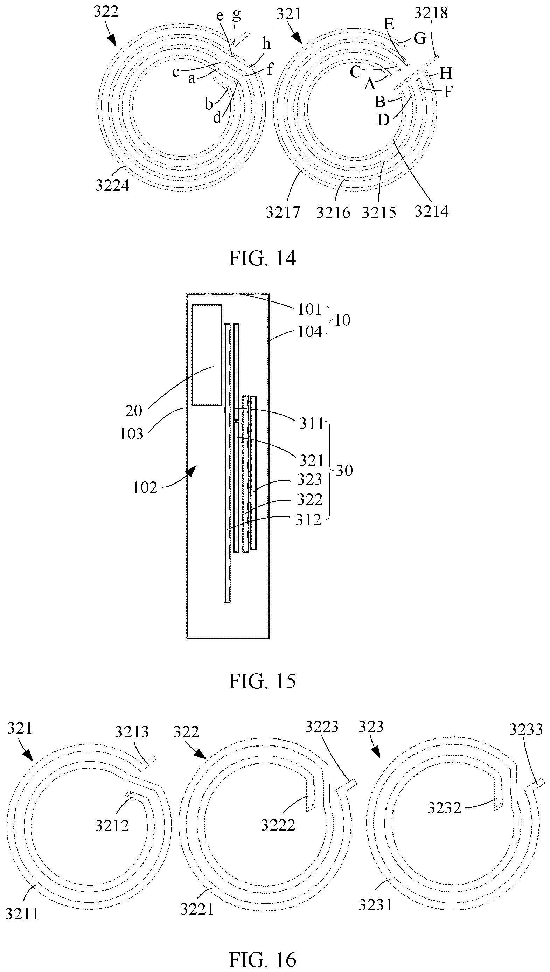

In another implementation, as shown in FIG. 14, the first coil 321 may be connected in parallel to the second coil 322. Such an arrangement can reduce impedance of the coil module 30. For example, the second coil 322 may include a third wire 3224, the third wire 3224 extends spirally around a center, and turns of the second coil 322 are located on a same plane parallel to the first heat dissipation plate 311 (as shown in FIG. 10). The first coil 321 includes a first conductive section 3214 and a second conductive section 3215. Both the first conductive section 3214 and the second conductive section 3215 are arc-shaped, centers of the first conductive section 3214 and the second conductive section 3215 are located at a same point, and the centers of the first conductive section 3214 and the second conductive section 3215 coincide with a center of the second coil 322.

The first conductive section 3214 and the second conductive section 3215 are spaced apart along a radial direction. In other words, arc radii corresponding to the first conductive section 3214 and the second conductive section 3215 are different. The first conductive section 3214 is connected in parallel to one turn of the second coil 322, and the second conductive section 3215 is connected in parallel to another turn of the second coil 322. Refer to FIG. 14. A of the first conductive section 3214 is connected to a of the third wire 3224, B of the first conductive section 3214 is connected to b of the third wire 3224, C of the second conductive section 3215 is connected to c of the third wire 3224, and D of the second conductive section 3215 is connected to d of the third wire 3224. In such an arrangement, the first conductive section 3214 can reduce impedance of the turn that is of the second coil 322 and that is connected in parallel to the first conductive section 3214, and the second conductive section 3215 can reduce impedance of the turn that is of the second coil 322 and that is connected in parallel to the second conductive section 3215, thereby reducing the impedance of the coil module 30.

In the foregoing implementation, a radius of the first conductive section 3214 is equal to a radius of the turn that is of the third wire 3224 and that is connected in parallel to the first conductive section 3214, and a radius of the second conductive section 3215 is equal to a radius of the turn that is of the third wire 3224 and that is connected in parallel to the second conductive section 3215. Correspondingly, two ends of the first conductive section 3214 may be connected to a turn of the third wire 3224 through a conductive hole, and two ends of the second conductive section may also be connected to a turn of the third wire 3224 through a conductive hole.

Still refer to FIG. 14. In some embodiments, the quantity of turns of the second coil 322 is 4. Correspondingly, the first coil 321 includes the first conductive section 3214, the second conductive section 3215, a third conductive section 3216, a fourth conductive section 3217, and a lead wire 3218. The first conductive section 3214, the second conductive section 3215, the third conductive section 3216, and the fourth conductive section 3217 are all arc-shaped. In addition, centers corresponding to the first conductive section 3214, the second conductive section 3215, the third conductive section 3216, and the fourth conductive section 3217 all coincide with the center of the second coil 322. The radius of the first conductive section 3214 is less than the radius of the second conductive section 3215, the radius of the second conductive section 3215 is less than a radius of the third conductive section 3216, and the radius of the third conductive section 3216 is less than a radius of the fourth conductive section 3217.

The first conductive section 3214, the second conductive section 3215, the third conductive section 3216, and the fourth conductive section 3217 each are connected in parallel to one turn of the second coil 322. Refer to FIG. 14. A of the first conductive section 3214 is connected to a of the third wire 3224, B of the first conductive section 3214 is connected to b of the third wire 3224, C of the second conductive section 3215 is connected to c of the third wire 3224, D of the second conductive section 3215 is connected to d of the third wire 3224, and E of the third conductive section 3216 is connected to e of the third wire 3224, F of the third conductive section 3216 is connected to f of the third wire 3224, G of the fourth conductive section 3217 is connected to g of the third wire 3224, and H of the fourth conductive section 3217 is connected to h of the third wire 3224. The lead wire 3218 is electrically connected to an end that is of the third wire 3224 and that is close to the center, and both the lead wire 3218 and an end that is of the third wire 3224 and that is away from the center are electrically connected to the mainboard 20, so that the coil module 30 is connected to the mainboard 20.

In the foregoing implementation, the first coil 321 and the second coil 322 may be formed on a double-sided copper-clad plate. To be specific, copper plates are formed on both sides of the second adhesive layer 302, and then some detaching materials of the two copper plates are removed, so that the first coil 321 is formed on one copper plate, and the second coil 322 is formed on the other copper plate.

The first coil 321 and the second coil 322 in FIG. 13 each have two turns, and the first coil 321 is connected in series to the second coil 322, so that a quantity of turns of the coil module is 4. Both the first coil 321 and the second coil 322 in FIG. 14 have four turns, and the first coil 321 is connected in parallel to the second coil 322, so that a quantity of turns of the coil module is also 4. It can be learned from this that, in the solutions shown in FIG. 13 and FIG. 14, quantities of turns of the coil modules are equal, so that it can be ensured that inductances of the coil modules are equal.

### Scenario 2

Refer to FIG. 15. A difference between this scenario and Scenario 1 lies in that the coil module 30 further includes a third coil 323. The third coil 323 is disposed on a side that is of the first coil 321 and that is away from the heat source, and the third coil 323 covers the first coil 321.

In an implementation in which the coil module 30 includes a second coil 322, the second coil 322 may be located between the first coil 321 and the third coil 323. Correspondingly, the second coil 322 covers the first coil 321 and the first heat dissipation plate 311, and the third coil 323 covers the second coil 322. A projection of the second coil 322 onto a plane parallel to the mainboard 20 may completely coincide with a projection of the third coil 323 onto the plane parallel to the mainboard 20.

The third coil 323 is connected to the first coil 321. Such an arrangement can improve wireless charging effect of the coil module 30.

In an implementation in which the first coil 321 is connected in series to the second coil 322, the third coil 323 may also be connected in series to the first coil 321. In other words, the first coil 321, the second coil 322, and the third coil 323 are connected in series. Such an arrangement can further increase a quantity of turns of the coil module 30, to further increase a voltage of an induced alternating current generated by the coil module 30.

Refer to FIG. 16. For example, the first coil 321 includes a first wire 3211 that extends spirally around a center, the second coil 322 includes a second wire 3221 that extends spirally around a center, and the third coil 323 includes a fourth wire 3231 that extends spirally around a center. A first end 3212 that is of the first wire 3211 and that is close to the center is electrically connected to a second end 3222 that is of the second wire 3221 and that is close to the center. A third end 3213 that is of the first wire 3211 and that is away from the center is electrically connected to the mainboard 20. A fourth end 3223 that is of the second wire 3221 and that is away from the center is electrically connected to a fifth end 3233 that is of the fourth wire 3231 and that is away from the center. A sixth end 3232 that is of the fourth wire 3231 and that is close to the center is electrically connected to the mainboard 20. In this way, the first coil 321, the second coil 322, and the third coil 323 are connected in series.

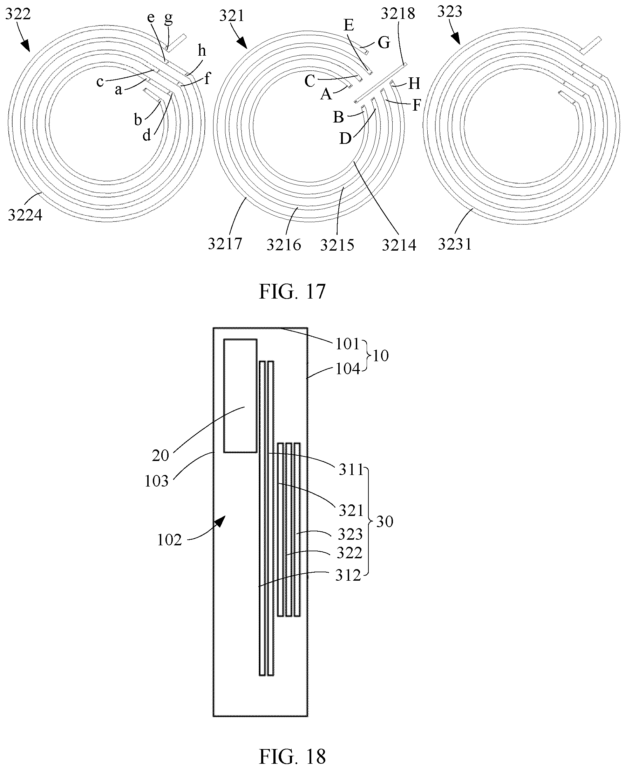

Refer to FIG. 17. In an implementation in which the first coil 321 is connected in parallel to the second coil 322, the third coil 323 may also be connected in parallel to the first coil 321. Such an arrangement can further reduce impedance of the coil module 30. For example, the third coil 323 includes a fourth wire 3231, the fourth wire 3231 extends spirally around a center, one end that is of the fourth wire 3231 and that is close to the center is connected to one end that is of the third wire 3224 and that is close to a center, and one end that is of the fourth wire 3231 and that is away from the center is connected to one end that is of the third wire 3224 and that is away from the center, so that the third coil 323 is connected in parallel to the second coil 322. A manner of connection between the second coil 322 and the first coil 321 may be the same as the manner of connection in Scenario 1. Details are not described herein.

In a related technology shown in FIG. 18, a coil module 30 includes a second heat dissipation plate 312, a first heat dissipation plate 311, a first coil 321, a second coil 322, and a third coil 323 that are sequentially stacked in a direction away from a mainboard 20. In comparison with the foregoing related technology, as shown in FIG. 15, in this embodiment, the first coil 321 and the first heat dissipation plate 311 are disposed at a same layer, thereby reducing a thickness of the coil module 30.

### Scenario 3

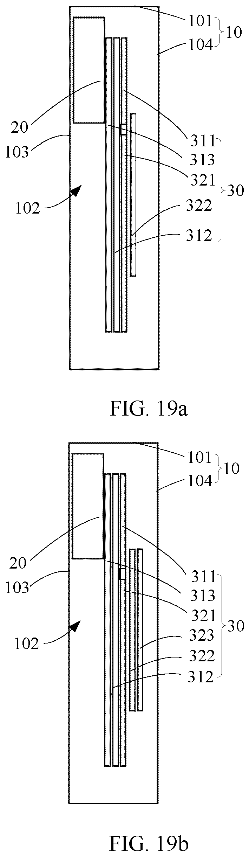

Refer to FIG. 19a. A difference between this scenario and Scenario 1 and Scenario 2 lies in that the coil module 30 may further include a third heat dissipation plate 313. The third heat dissipation plate 313 is disposed on a side that is of a second heat dissipation plate 312 and that faces the mainboard 20, and the third heat dissipation plate 313 is attached to the mainboard 20. In such an arrangement, the first heat dissipation plate 311, the second heat dissipation plate 312, and the third heat dissipation plate 313 all can transfer heat generated by the mainboard 20 in a direction that is parallel to the mainboard 20 and that is away from the mainboard 20, thereby improving a speed of transferring heat in the direction away from the mainboard 20, and improving heat dissipation effect for the mainboard 20.

The second heat dissipation plate 312 may be attached to both the third heat dissipation plate 313 and the first heat dissipation plate 311. For example, a fifth adhesive layer is disposed between the third heat dissipation plate 313 and the second heat dissipation plate 312, to implement connection between the third heat dissipation plate 313 and the second heat dissipation plate 312 through the fifth adhesive layer.

In some implementations, a part of the third heat dissipation plate 313 is attached to the mainboard 20, and the other part of the third heat dissipation plate 313 extends outward from the mainboard 20. Among projections onto a plane parallel to the mainboard 20, a projection of the first heat dissipation plate 311, a projection of the first coil 321, and a projection of the second heat dissipation plate 312 are all in a projection of the third heat dissipation plate 313. In such an arrangement, the third heat dissipation plate 313 may have a large area. Correspondingly, the projection of the second heat dissipation plate 312 onto the plane parallel to the mainboard 20 may completely coincide with the projection of the third heat dissipation plate 313 onto the plane parallel to the mainboard 20, so that both the third heat dissipation plate 313 and the second heat dissipation plate 312 have sufficient areas, to improve a speed of transferring heat to the housing 10.

In this scenario, the second coil 322 is electrically connected to the first coil 321. A location at which the second coil 322 is disposed and a manner of connection between the second coil 322 and the first coil 321 may be approximately the same as those in Scenario 1. Details are not described herein. Such an arrangement can improve performance of the coil module 30.

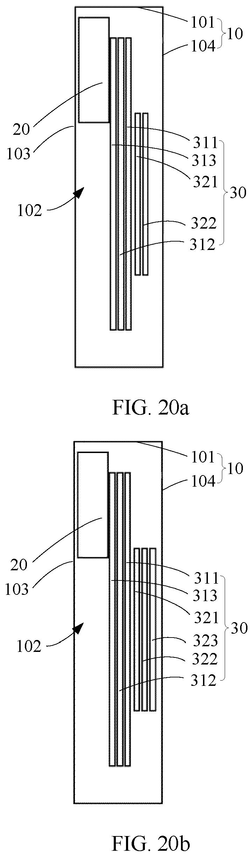

In a related technology shown in FIG. 20a, a coil module 30 includes a third heat dissipation plate 313, a second heat dissipation plate 312, a first heat dissipation plate 311, a first coil 321, and a second coil 322 that are sequentially stacked in a direction away from a mainboard 20. In comparison with the foregoing related technology, as shown in FIG. 19a, in this embodiment, the first coil 321 and the first heat dissipation plate 311 are disposed at a same layer, so that a thickness of the coil module 30 is reduced, thereby reducing a thickness of the electronic device.

Refer to FIG. 19b. In an implementation in which the coil module 30 includes the second coil 322, the coil module 30 may further include a third coil 323. The third coil 323 is electrically connected to the first coil 321 and the second coil 322. A location at which the third coil 323 is disposed and a manner of connection between the third coil 323 and the first coil 321 and the second coil 322 may be approximately the same as those in Scenario 2. Details are not described herein. Such an arrangement can further improve performance of the coil module 30.

In a related technology shown in FIG. 20b, a coil module 30 includes a third heat dissipation plate 313, a second heat dissipation plate 312, a first heat dissipation plate 311, a first coil 321, a second coil 322 and a third coil 323 that are sequentially stacked in a direction away from a mainboard 20. In comparison with the foregoing related technology, as shown in FIG. 19b, in this embodiment, the first coil 321 and the first heat dissipation plate 311 are disposed at a same layer, so that a thickness of the coil module 30 is reduced, thereby reducing a thickness of the electronic device.

### Scenario 4

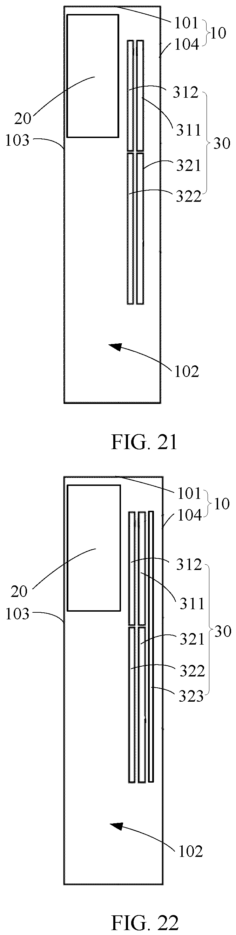

As shown in FIG. 21, a difference between this scenario and Scenario 1 lies in that a second heat dissipation plate 312 is disposed on a side that is of the first heat dissipation plate 311 and that faces the mainboard 20, the coil module further includes a second coil 322, and the second coil 322 and the second heat dissipation plate 312 are disposed at a same layer. In other words, the second coil 322 and the second heat dissipation plate 312 are located on a same plane parallel to the mainboard 20. In such an arrangement, heat from the mainboard 20 may be transferred between the first heat dissipation plate 311 and the second heat dissipation plate 312, thereby improving a speed of transferring heat and improving heat dissipation effect for the mainboard 20. In addition, in comparison with a manner in which the second heat dissipation plate 312 and the second coil 322 are sequentially disposed in a direction perpendicular to the mainboard 20 (the second heat dissipation plate 312 and the second coil 322 are stacked), a thickness of the coil module 30 in the direction perpendicular to the mainboard 20 can be further reduced, thereby reducing a thickness of the electronic device and further reducing a size of the electronic device.

In this scenario, a projection of the second heat dissipation plate 312 onto a plane parallel to the mainboard 20 may completely coincide with a projection of the first heat dissipation plate 311 onto the plane parallel to the mainboard 20.

As shown in FIG. 13, in some implementations, the first coil 321 and the second coil 322 may be connected in series. In such an arrangement, the first coil 321 and the second coil 322 may form a coil with more turns, to increase the voltage of the induced alternating current generated by the coil module 30. For example, the first coil 321 includes a first wire 3211, the first wire 3211 extends spirally around a center, and turns of the first coil 321 are located on a same plane parallel to the mainboard 20. The second coil 322 includes a second wire 3221, the second wire 3221 extends spirally around a center, and turns of the second coil 322 are located on the same plane parallel to the mainboard 20. A first end 3212 that is of the first coil 321 and that is close to the center may be electrically connected to a second end 3222 that is of the second coil 322 and that is close to the center. Both a third end 3213 that is of the first coil 321 and that is away from the center and a fourth end 3223 that is of the second coil 322 and that is away from the center are electrically connected to the mainboard 20.

In another implementation, the first coil 321 may be connected in parallel to the second coil 322. Such an arrangement can reduce impedance of the coil module 30. For example, the first coil 321 includes a first wire 3211, the first wire 3211 extends spirally around a center, and turns of the first coil 321 are located on a same plane parallel to the mainboard 20. The second coil 322 includes a second wire 3221, the second wire 3221 extends spirally around a center, and turns of the second coil 322 are located on the same plane parallel to the mainboard 20. A first end 3212 that is of the first coil 321 and that is close to the center may be electrically connected to a second end 3222 that is of the second coil 322 and that is close to the center. A third end 3213 that is of the first coil 321 and that is away from the center and a fourth end 3223 that is of the second coil 322 and that is away from the center are connected. The first end 3212 of the first coil 321 and the second end 3222 are electrically connected to the mainboard 20. In this way, the first coil 321 is connected in parallel to the second coil 322.

Refer to FIG. 22. In this scenario, the coil module 30 further includes a third coil 323. The third coil 323 is disposed on a side that is of the first coil 321 and that is away from the mainboard 20, and the third coil 323 covers the first coil 321. The third coil 323 is electrically connected to the first coil 321, to improve performance of the coil module 30.

In an implementation in which the first coil 321 is connected in series to the second coil 322, the third coil 323 may be connected in series to the first coil 321. In other words, the first coil 321, the second coil 322, and the third coil 323 are connected in series, so that a quantity of turns of the coil module 30 may be further increased, to further increase a voltage of an alternating current generated by the coil module 30. As shown in FIG. 16, for example, the third coil 323 may include a fourth wire 3231, the fourth wire 3231 extends spirally around a center of the fourth wire 3231, and turns of the fourth wire 3231 are located on a same plane parallel to the mainboard 20. The fifth end 3233 that is of the fourth wire 3231 and that is away from the center is electrically connected to the fourth end 3223 of the second coil 322, and the sixth end 3232 that is of the fourth coil and that is away from the center is electrically connected to the mainboard 20.

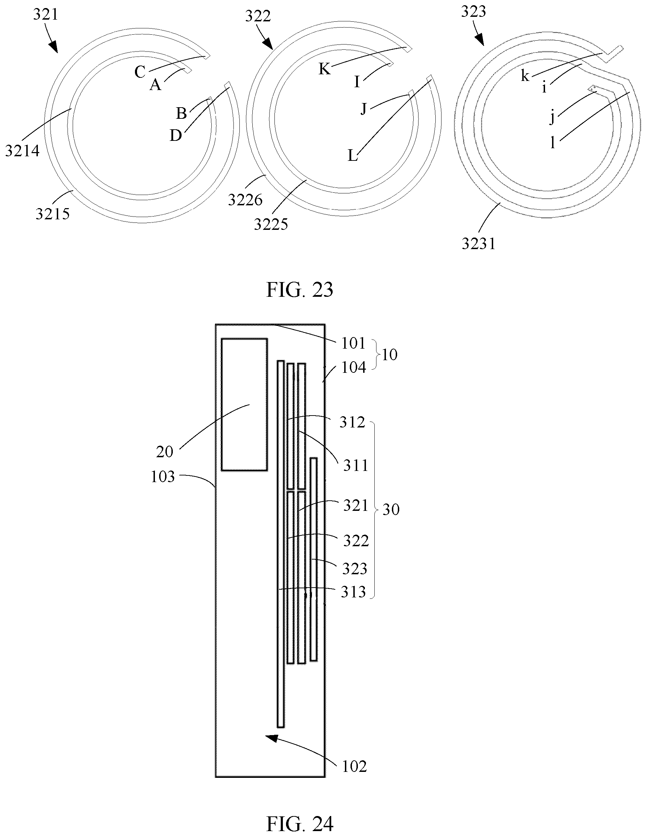

Refer to FIG. 23. In an implementation in which the first coil 321 is connected in parallel to the second coil 322, the third coil 323 may be connected in parallel to the first coil 321. In other words, the first coil 321, the second coil 322, and the third coil 323 are connected in parallel. Such an arrangement can further reduce the impedance of the coil module 30.

For example, the third coil 323 may include a fourth wire 3231, the fourth wire 3231 extends spirally around a center of the fourth wire 3231, and turns of the fourth coil are located on a same plane parallel to the mainboard 20. The first coil 321 includes a first conductive section 3214 and a second conductive section 3215. Both the first conductive section 3214 and the second conductive section 3215 are arc-shaped, centers of the first conductive section 3214 and the second conductive section 3215 are located at a same point, and the centers of the first conductive section 3214 and the second conductive section 3215 coincide with a center of the third coil 323.

The first conductive section 3214 and the second conductive section 3215 are spaced apart along a radial direction. In other words, arc radii corresponding to the first conductive section 3214 and the second conductive section 3215 are different. The first conductive section 3214 is connected in parallel to one turn of the third coil 323, and the second conductive section 3215 is connected in parallel to another turn of the third coil 323. Still refer to FIG. 23. A of the first conductive section 3214 is connected to i of the fourth wire 3231, B of the first conductive section 3214 is connected to j of the fourth wire 3231, C of the second conductive section 3215 is connected to k of the fourth wire 3231, and D of the second conductive section 3215 is connected to l of the fourth wire 3231. In such an arrangement, the first conductive section 3214 can reduce impedance of the turn that is of the third coil 323 and that is connected in parallel to the first conductive section 3214, and the second conductive section 3215 can reduce impedance of the turn that is of the third coil 323 and that is connected in parallel to the second conductive section 3215, thereby reducing the impedance of the coil module 30.

A structure of the second coil 322 may be similar to a structure of the first coil 321. For example, the second coil 322 includes a fifth conductive section 3225 and a sixth conductive section 3226. Both the fifth conductive section 3225 and the sixth conductive section 3226 are arc-shaped, centers of the fifth conductive section 3225 and the sixth conductive section 3226 are located at a same point, and the centers of the fifth conductive section 3225 and the sixth conductive section 3226 coincide with the center of the third coil 323. The fifth conductive section 3225 and the sixth conductive section 3226 are spaced apart along a radial direction. In other words, arc radii corresponding to the fifth conductive section 3225 and the sixth conductive section 3226 are different. The fifth conductive section 3225 is connected in parallel to the first conductive section 3214, and the sixth conductive section 3226 is connected in parallel to the second conductive section 3215. Refer to FIG. 23. A of the first conductive section 3214 is connected to I of the fifth conductive section 3225, B of the first conductive section 3214 is connected to J of the fifth conductive section, C of the second conductive section 3215 is connected to K of the sixth conductive section 3226, and D of the second conductive section 3215 is connected to L of the sixth conductive section 3226. In this way, the first coil 321, the second coil 322, and the third coil 323 are connected in parallel.

As shown in FIG. 24, in some implementations, the coil module 30 further includes a third heat dissipation plate 313. The third heat dissipation plate 313 is disposed on a side that is of the second heat dissipation plate 312 and that faces the mainboard 20, and the third heat dissipation plate 313 is attached to the mainboard 20. In such an arrangement, the first heat dissipation plate 311, the second heat dissipation plate 312, and the third heat dissipation plate 313 all can transfer heat generated by the mainboard 20 in a direction that is parallel to the mainboard 20 and that is away from the mainboard 20, thereby improving a speed of transferring heat in the direction away from the mainboard 20, and improving heat dissipation effect for the mainboard 20.

A part of the third heat dissipation plate 313 may be attached to the mainboard 20, and the other part of the third heat dissipation plate 313 extends outward from the mainboard 20. Among projections onto a plane parallel to the mainboard 20, a projection of the first heat dissipation plate 311, a projection of the first coil 321, and a projection of the second heat dissipation plate 312 are in a projection of the third heat dissipation plate 313, the projection of the second heat dissipation plate 312 may completely coincide with the projection of the first heat dissipation plate 311, and the projection of the first coil 321 may coincide with a projection of the second coil 322. In such an arrangement, the third heat dissipation plate 313 may have a large area, so that the third heat dissipation plate 313 has a sufficient area, to improve a speed of transferring heat to the housing 10.

In the related technology shown in FIG. 20b, the coil module 30 includes the third heat dissipation plate 313, the second heat dissipation plate 312, the first heat dissipation plate 311, the first coil 321, the second coil 322, and the third coil 323. The third heat dissipation plate 313, the second heat dissipation plate 312, the first heat dissipation plate 311, the first coil 321, the second coil 322, and the third coil 323 are sequentially stacked in the direction away from the mainboard 20. In comparison with the foregoing related technology, as shown in FIG. 24, in this embodiment, the first heat dissipation plate 311 and the first coil 321 are disposed at a same layer, and the second heat dissipation plate 312 and the second coil 322 are disposed at a same layer, so that a thickness of the coil module 30 is reduced, thereby reducing a thickness of the electronic device.

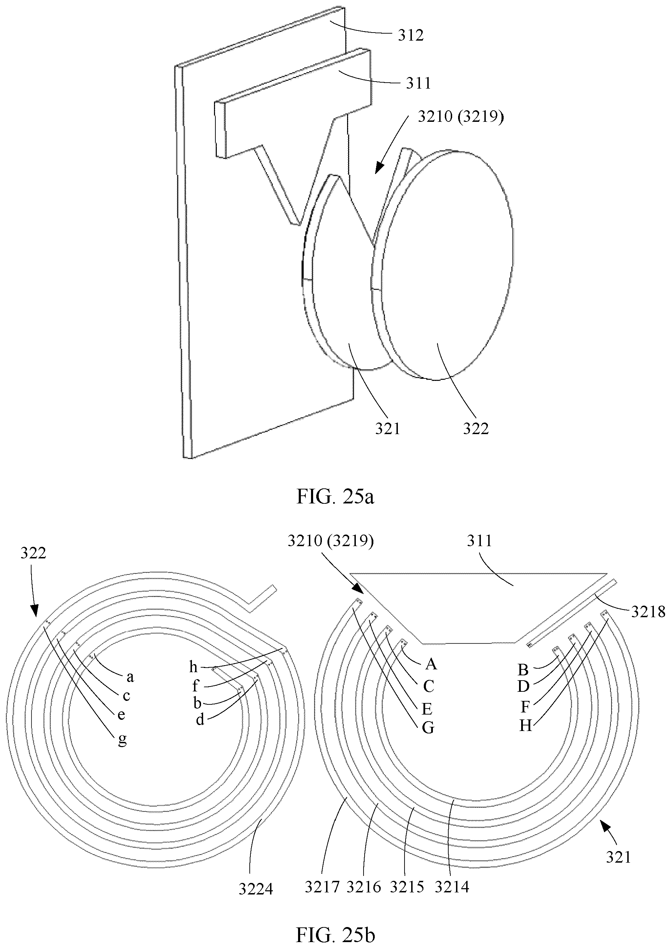

As shown in FIG. 25a, in Scenario 1 to Scenario 4, an avoidance structure 3210 is provided at one end (a top end in a direction shown in the figure) that is of the first coil 321 and that is close to the first heat dissipation plate 311. The avoidance structure 3210 is configured to form an avoidance space extending to a center line of the first coil 321, and the first heat dissipation plate 311 extends into the avoidance space. Such an arrangement can increase an area of the first heat dissipation plate 311, thereby improving heat dissipation effect for the mainboard 20.

It may be understood that the first heat dissipation plate 311 is disposed close to the mainboard 20. Correspondingly, the avoidance structure 3210 is also disposed toward the mainboard 20, so that the first heat dissipation plate 311 can extend into the avoidance space.

For example, the avoidance structure 3210 may include an opening 3219, and a part of the first heat dissipation plate 311 is located in the opening 3219. In such an arrangement, the structure is simple and easy to manufacture. Certainly, in another implementation, the avoidance structure 3210 may alternatively be a slot formed by bending the first coil 321. This is not limited in this embodiment.

As shown in FIG. 25b, in an implementation in which the first coil 321 includes the first conductive section 3214, the second conductive section 3215, a third conductive section 3216, a fourth conductive section 3217, and a lead wire 3218. End A, end B, end C, end D, end E, end F, end G, and end H form an opening 3219. Correspondingly, the lead wire 3218 may be disposed in the opening 3219.

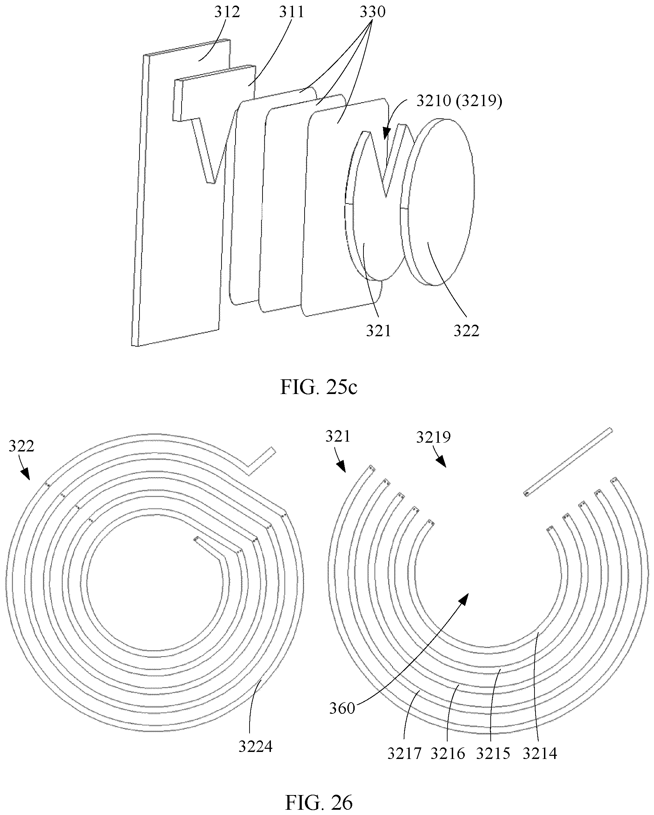

Refer to FIG. 25c. It may be understood that, in an implementation in which the coil module includes a magnetic conductive sheet 330, the magnetic conductive sheet 330 may be disposed between the first coil 321 and the first heat dissipation plate 311, and a part that is of the magnetic conductive sheet 330 and that corresponds to the opening 3219 is embedded into the opening 3219, so that the first heat dissipation plate 311 corresponding to the opening 3219 can extend into the opening 3219.

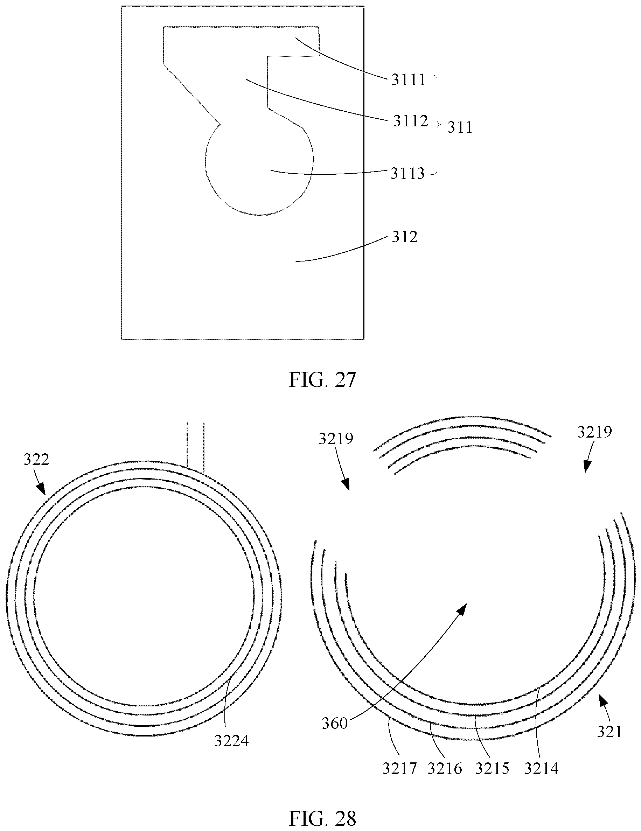

Refer to FIG. 26 and FIG. 27. In some implementations, the first coil 321 encloses an accommodating space 360 that communicates with the opening 3219. The first heat dissipation plate 311 includes a body 3111 and an extension portion 3112, and the body 3111 covers the mainboard 20. One end of the extension portion 3112 is connected to the mainboard 20, and the extension portion 3112 is disposed in the opening 3219. The first heat dissipation plate 311 further includes a filling portion 3113 located at an end that is of the extension portion 3112 and that is away from the body 3111, and the filling portion 3113 is disposed in the accommodating space 360. Such an arrangement can further increase the area of the first heat dissipation plate 311, further increasing a speed of transferring heat to the housing 10, and further improving heat dissipation effect for the mainboard 20.

It may be understood that the accommodating space 360 may be located in the middle of the first coil 321, that is, the first conductive section 3214 encloses the accommodating space, and a projection of the accommodating space onto the mainboard 20 may be approximately circular. The body 3111, the extension portion 3112, and the filling portion 3113 are all plate-shaped, and the body 3111, the extension portion 3112, and the filling portion 3113 are of an integrated structure, so that heat can be transferred between the body 3111, the extension portion 3112, and the filling portion 3113.

A projection of the filling portion 3113 onto the mainboard 20 may be in a circular shape, and the projection of the filling portion 3113 may coincide with the projection of the accommodating space 360, so that the filling portion 3113 has a large enough area, thereby improving heat dissipation effect. Certainly, the projection of the filling portion 3113 onto the mainboard 20 may alternatively be rectangular, and a projection shape of the filling portion 3113 onto the mainboard 20 is not limited in this embodiment.

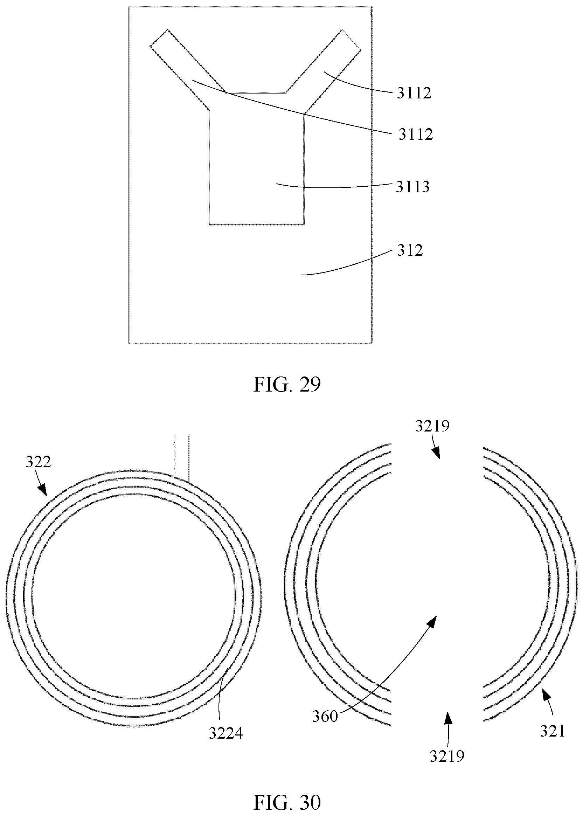

Refer to FIG. 28 and FIG. 29. In some embodiments, there may be a plurality of openings 3219. The plurality of openings 3219 are spaced apart around the center line of the first coil 321. There are a plurality of extension portions 3112, and each extension portion 3112 extends into one of the openings 3219. In other words, the body 3111 and the filling portion 3113 are connected through the plurality of extension portions 3112, to improve a speed of transferring heat between the body 3111 and the filling portion 3113.

In an implementation in which there are a plurality of openings 3219, there may be two openings 3219, and a central angle corresponding to each of the two openings 3219 may be 45°, 60°, 90°, or the like. It may be understood that the opening 3219 may be disposed close to the heat source, so that heat from the heat source may be transferred to the filling portion 3113 after passing through the extension portion 3112 in the opening 3219 that is close to the heat source.

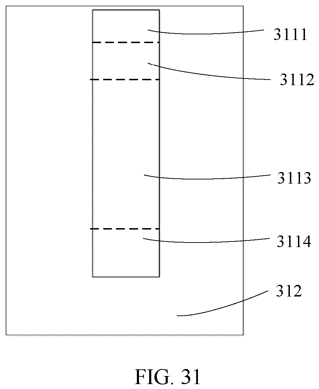

Refer to FIG. 30 and FIG. 31. In some embodiments, there are two openings 3219, and the two openings 3219 are disposed opposite to each other. The first heat dissipation plate 311 may further include an epitaxial portion 3114 located at an end that is of the filling portion 3113 and that is away from the extension portion 3112. The extension portion 3112 is disposed in one opening 3219, and the epitaxial portion 3114 is disposed in the other opening 3219, or the epitaxial portion 3114 extends from the other opening 3219 to the outside of the first coil 321. Such an arrangement can further increase the area of the first heat dissipation plate 311, to further improve heat dissipation effect for the mainboard 20.

It may be understood that, in the implementation in which there are a plurality of openings 3219, correspondingly, the first conductive section 3214, the second conductive section 3215, the third conductive section 3216, and the fourth conductive section 3217 each include a plurality of sections spaced apart around a center, and each section is connected in parallel to a corresponding turn of the second coil 322.

It should be noted that, in the descriptions of embodiments of this application, unless otherwise specified and limited, the terms "interconnect" and "connect" should be understood in a broad sense. For example, the terms may indicate a fixed connection or an integral connection, may indicate a mechanical connection or an electrical connection, or may indicate a direct connection, an indirect connection through an intermediate medium, or internal communication between two components. Persons skilled in the art may understand specific meanings of the terms in embodiments of this application based on a specific situation.

Finally, it should be noted that the foregoing embodiments are merely intended for describing the technical solutions of embodiments of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A coil module, comprising:
a first heat dissipation plate;
a second heat dissipation plate, wherein the second heat dissipation plate and the first heat dissipation plate are stacked, the second heat dissipation plate is disposed on a side that is of the first heat dissipation plate and that faces a heat source, and the first heat dissipation plate and the second heat dissipation plate are configured to dissipate heat from the heat source; and
a first coil, wherein the first coil and the first heat dissipation plate are disposed at a same layer.

2. The coil module according to claim 1, wherein the coil module further comprises a second coil, the second coil and the second heat dissipation plate are disposed at a same layer, and the first coil is electrically connected to the second coil.

3. The coil module according to claim 1, wherein the coil module further comprises a second coil, the second coil is disposed on a side that is of the first coil and that is away from the heat source, the second coil covers the first coil, and the first coil is electrically connected to the second coil.

4. The coil module according to claim 2 or 3, wherein the first coil is connected in series to the second coil.

5. The coil module according to claim 2 or 3, wherein the first coil is connected in parallel to the second coil.

6. The coil module according to any one of claims 1 to 5, wherein an avoidance structure is provided at one end that is of the first coil and that is close to the first heat dissipation plate, the avoidance structure is configured to form an avoidance space extending to a center line of the first coil, and the first heat dissipation plate extends into the avoidance space.

7. The coil module according to claim 6, wherein the avoidance structure comprises an opening.

8. The coil module according to claim 7, wherein the first coil encloses an accommodating space, the opening communicates with the accommodating space, the first heat dissipation plate comprises a body, an extension portion, and a filling portion located at an end that is of the extension portion and that is away from the body, the extension portion extends into the opening, and the filling portion is disposed in the accommodating space.

9. The coil module according to claim 7 or 8, wherein there are a plurality of openings, the plurality of openings are spaced apart around the center line of the first coil, there are a plurality of extension portions, and each extension portion extends into one of the openings.

10. The coil module according to any one of claims 1 to 9, wherein the coil module further comprises a third coil, the third coil is disposed on a side that is of the first coil and that is away from the heat source, the third coil covers the first coil, and the third coil is electrically connected to the first coil.

11. The coil module according to claim 10, wherein the third coil is connected in series to the first coil.

12. The coil module according to claim 10, wherein the third coil is connected in parallel to the first coil.

13. The coil module according to any one of claims 1 to 12, wherein the coil module further comprises a third heat dissipation plate, the third heat dissipation plate is disposed on a side that is of the second heat dissipation plate and that faces the heat source, and the third heat dissipation plate is configured to be attached to the heat source.

14. The coil module according to claim 13, wherein among projections onto a plane parallel to the first heat dissipation plate, a projection of the first heat dissipation plate, a projection of the first coil, and a projection of the second heat dissipation plate are all in a projection of the third heat dissipation plate.

15. An electronic device, comprising: a housing, and a heat source and the coil module according to any one of claims 1 to 14 that are disposed in the housing, wherein at least a part of the first heat dissipation plate is attached to the heat source.

16. The electronic device according to claim 15, wherein the heat source comprises a mainboard, and the first coil is electrically connected to the mainboard.
